# EUROPEAN PATENT SPECIFICATION

(11) **EP 2 306 102 B1**
(45) Date of publication and mention of the grant of the patent: **27.03.2013**
(21) Application number: 09012333.2
(22) Date of filing: 29.09.2009
(51) Int. Cl.: F28C 1/00, F24F 5/00, F24J 2/04, F24J 2/23

(54) **Device and method for cooling down and/or warming up fluid**
Vorrichtung und Verfahren zum Abkühlen und Aufwärmen von Flüssigkeit
Dispositif et procédé de refroidissement et de chauffage de fluide

(43) Date of publication of application: 06.04.2011
(73) Proprietor: Hemera Energìas Renovables España, S.L.U., 08019 Barcelona (ES)
(72) Inventor: Martinez Galàn, José, 29591 Santa Rosalia Màlaga (ES)
(74) Representative: Grünecker, Kinkeldey, Stockmair & Schwanhäusser

(56) References cited:
- WO-A1-2005/005894
- WO-A1-2007/112978
- US-A- 3 991 938
- US-A- 4 517 958
- US-A1- 2004 031 282

## Description

The present invention provides a device and a method for a controlled exchange of thermal energy with the environment. More specifically, it refers to cooling down and/or warming up fluid.

### Background

From Spanish patent No. ES 2 002 921, a roof substituting construction is known that provides of both reflecting and absorbing surfaces formed in cavities, wherein these surfaces can be watered and exposed to solar radiation. Depending on the respective temperature of the surface, the water contacting the same is cooled down or warmed up.

However, in particular in summer and hot environments, the cooling capability of this system may be insufficient to provide enough cooling. In addition, this system requires a lot of components and materials, which makes it very heavy, expensive and complex to install. Therefore, another manner of providing both cooling and heating seems desirable.

In order to cool down a fluid, it is further known to employ cooling towers operating on the principle of evaporation. The interaction of a fluid (usually water) and air is utilised to detract heat of vaporisation from the fluid. In natural draught cooling towers, the resulting moist air buoyancy produces a current of air, thus further increasing the evaporation. In mechanical draught cooling towers, fans are employed to produce ventilation both to raise the evaporation process and to emit the heated air.

However, natural draught cooling towers have to be very high to provoke a stack effect of a required strength. Additionally, depending on the weather, they may produce voluminous vapour emissions. As a consequence, this type of towers can be a disturbing factor for aircrafts and birds, and it can be considered objectionable both from environmental and urban points of view.

On the other hand, the mechanical draught cooling towers are energy consuming, as the fans they use have to be powered, and they even produce noise. Moreover, this type of towers has to cope with the problem of water drops being emitted from the cooling device. The dissemination of such drops is a serious matter with regard to a bacterial contamination with legionella, as the warm water within the cooling towers provides favourable conditions for these bacterias to proliferate.

Document WO 2007/112978 discloses a method for converting energy in a thermal system for controlling the temperature of a building, and an apparatus.

### Summary of the invention

An object of the present invention is, therefore, to provide a device and a method suitable for cooling down a fluid while avoiding the above mentioned disadvantages of the prior art. In particular, the present invention directs to a device for generating or intensifying convection, wherein the device allows both cooling down and warming up fluid using natural energy sources.

These objects are met with the device of claim 1 and the method of claim 14. Preferred embodiments are disclosed in the dependent claims.

The device according to claim 1 is capable of both cooling down and warming up fluid. It provides of at least one (i.e., one or more) opening(s) for emitting fluid in order to cool it down (further referred to as at least one opening corresponding to cooling down), and of at least one (i.e., one or more) opening(s) for emitting fluid to warm it up (further referred to as at least one opening corresponding to warming up). Therein, the former at least one opening is such that the emitted fluid takes a course that includes a part in which the fluid falls or flies through the air. By this falling or flying, the interaction of the fluid and the air (in particular, evaporation or heat exchange) can be intensified. Consequently, part of the fluid evaporates, and the remaining fluid (i.e., the non-evaporated) becomes cooler than it was before its contact with the air. This reaction is particularly boosted in a preferred embodiment of the invention, in which the at least one opening corresponding to cooling down is such that the fluid is emitted by spraying it, so that the fluid's contact surface with the air is extended by producing a large amount of tiny drops, which together provide a large surface for evaporation. To this end, in particular, one or more spraying nozzles may be provided. Moreover, the fluid emission corresponding to cooling down may be carried out from different openings and such that the respective jets or drops of emitted fluid collide with each other, thereby producing tiny drops. By the evaporation, an adiabatic cooling of the fluid takes place.

### Possible embodiments of the invention

It is noted that the device of claim 1 represents a preferred embodiment of the invention, as it may be used for adjusting the temperature both in cold and in warm seasons. The invention, however, is not restricted to such a combined embodiment. In particular, the parts providing for cooling down fluid, as further detailed below, may also be arranged without including any opening corresponding to warming up fluid, and without the capability of warming up fluid.

As a particular fluid, a liquid as, for instance, water can be used, possibly provided with some additive such as an antifreeze agent, a softening agent or a disinfectant.

For each of cooling and warming up fluid, a circulation arrangement may be provided, by which emitted fluid can be collected and conducted back to the at least one opening corresponding to cooling down and/or warming up, respectively, the opening(s) being provided in a part of the circulation arrangement. In particular, a collecting basin may be installed to catch fluid, thus defining the end of the fluid's course through the air, and/or a gutter may receive flowing fluid. The fluid may also be collected by a surface such as the surface of a roof, onto which the device is installed. If the feature of warming up fluid is provided, then the overall fluid for cooling and/or warming up may be a shared one which can be conducted both to the one or more openings corresponding to cooling down and to the one or more openings corresponding to warming up, and which is then treated according to the respective intention. Alternatively, two or more separate fluid amounts can be provided for cooling down and warming up, respectively. Such separate fluids may have a different chemical composition. For example, they may be water including different additives.

The device may comprise an arrangement that is capable of shielding a space from the sky. Such an arrangement, further referred to also as shielding arrangement, may include or consist of, for instance, a board, or a stretched fabric, membrane or plastic film that can be positioned such that it provides shadow in a space below the arrangement while the sun radiates onto the same, and/or such that it protects some space underneath the arrangement from rain intrusion. The space shadowed or protected by such an arrangement during the whole day is further referred to as the space shielded by the arrangement. The board, membrane or the like included in the shielding arrangement may be installed so as to have an inclined surface with respect to the ground, and various of such boards, membranes etc. can be combined or assembled to form the shielding arrangement.

Roughly, the device covered by the shielding arrangement from sky may have the outward appearance of a prism that lies on one of its side faces (different from the base). In particular, it may appear as a lying prism having a triangular base face, wherein the shielding arrangement corresponds to two of the prism's three parallelogram faces.

As a particular example, the arrangement may look like a roof construction, wherein the space shielded from the sky corresponds to a loft covered by the roof. The height of this roof may be 2 metres or less, preferably 1 metre or less, and/or its building area may have a width between 0.5 metres and 5 metres, and/or a length between 1 metre and 20 metres. It is noted, however, that the device of the invention is not restricted to these dimensions.

Preferably, at least one opening corresponding to the cooling of fluid is positioned inside the space shielded by a shielding arrangement. As a consequence, the emitted fluid can be protected from being warmed by the sun, and its mixing with external (and possibly warmer) rain water can be avoided. In a preferred embodiment of the invention, the arrangement capable of shielding a space from sky can be installed such that it forms or at least partially confines a chamber (including the shielded space) in which the fluid can be emitted for being cooled down.

The shielding arrangement may provide one or more openings that serve as an air inlet or an air outlet into/ from the shielded space. Preferably, at least two such openings are provided such that one of them takes air into the space and the other one releases it. Therewith, a ventilation through the shielded space or chamber may be achieved which, when the fluid emission for cooling down is carried out inside this space, can intensify an evaporation process, thus boosting the cooling.

The one or more openings serving as an air inlet may be surrounded by an elongated intake whose width grows with increasing distance to the space, such as a funnel. This may enhance the ingress of wind into the shielded space and, therewith, strengthen the air flow expediting the evaporation.

Preferably, the at least one air inlet and the one or more air outlets are provided such that, once the device is installed, the air inlet is on a lower level than at least one of the one or more openings corresponding to cooling down, and/or an air outlet is on a higher level than such an opening. That is, in the installed device, the air inlet(s) and the air outlet(s) are preferably provided lower or higher than at least one opening corresponding to cooling down, respectively, while they are possibly shifted sideways with respect to such an opening, so that they are not necessarily directly below or above the opening. For instance, if a collecting basin is provided at a position lower than the opening for the fluid to be cooled down (so that the emitted fluid falls or is splashed or is sprayed into the basin), the one or more air inlets may be positioned beneath or adjacent the basin, whereas the one or more air outlets may be over or diagonally above the opening. Therewith, an air movement can be achieved which includes a direction contrary to gravity force, so that the falling fluid and the air flow cross each other or are oriented in opposite directions. It is also possible, however, to design the device such that at least one air inlet is located over or diagonally above at least one opening for cooling, so that the generated air flow includes a direction downwards, as does the movement of the falling, splashed or sprayed fluid.

The device includes at least one hollow portion that includes one or more air channel(s) through which air can flow or can be conducted. Such a portion further comprises openings by which at least one of the air channel(s) can take air in and let air out. An air flow within and/or through the one or more air channel(s) can be generated such that air is released from the respective air channel in an upmost or almost upmost position thereof. As a consequence, the hollow portion may produce a stack effect as does a chimney, but without rising highly into the air.

Through the one or more air inlet(s) of the shielding arrangement or through the openings taking air into a hollow portion, environmental air may enter the shielded space or an air channel within the hollow portion, respectively. Additionally or alternatively, air may be conducted from another location towards the one or more air inlets or openings. For instance, air (such as outgoing air of a building or engine, for example) that has more or less enthalpy (energy) than the environment may be released from a location, and conducted into the device.

If air that has lower enthalpy (energy) than the environmental air is conducted into the device, and the fluid is emitted (e.g., splashed or sprayed) through this air, the efficiency of the cooling is increased. In this way, the possibility of utilising other than environmental air, by conducting air towards the device, allows for an optimisation of cooling.

Moreover, if fluid is intended to be warmed up instead of cooled down, and the air conducted into the device has higher enthalpy (energy) than the environmental air, the energy exchange between the extracted air conducted into the device and the fluid helps warming up the fluid, which can be used for increasing the efficiency of the warming up process. Additionally or alternatively, by emitting the fluid onto a surface that is radiated by the sun, warm air conducted to the device may increase the warming up of the fluid. For instance, the warm air may heat the whole device or parts of it. If these parts result to be warmer than the flowing fluid, they may heat the flowing fluid in addition to the sun. Otherwise, they may at least avoid or reduce that the device's low temperature cools down the fluid, which would reduce the sun's warming effect. In embodiments where a transparent surface is provided at least partially above the flowing fluid to be warmed up, as detailed below, warm air may also be conducted into the interspace between the transparent surface and the surface on which the fluid is flowing. In this way, the warm air may increase the temperature in the interspace, in addition to the sun, so that the fluid's warming up is improved.

One or more of the at least one hollow portion(s) may have a laminated structure, such that various layers enclose one or more interspace(s) which build/s up at least a part of one or more of the air channel(s). That is, when an air flow occurs in such an air channel, air may take its course through spaces between different layers of the structure.

The layers may be parallel or inclined with respect to each other. Preferably, when the device is installed, a first one of the layers can be exposed to solar radiation. As a consequence of this radiation, air within an interspace beneath the first layer is preferably heated, wherein the interspace builds up or forms part of at least one of the air channel(s). In a particularly preferred embodiment, a second layer is included in the laminated structure, wherein the second layer at least partially borders a further interspace forming part of the same air channel, the latter interspace being located at least partially lower than the former one. Due to the difference of temperature of air in the air channel, a stack effect is preferably excited, which generates or intensifies an air flow in the air channel.

In other words, when the device is installed and an upmost layer of the included laminated portion is exposed to sunlight, then the solar radiation may cause heat within an upper part of the air channel, thus intensifying the natural draught in the layered structure of the hollow portion. This air flow may further extend to a region outside the hollow portion, e.g. to a space below it. By exposing fluid to the air flow, the evaporation of the fluid (and therewith, its cooling down) can be boosted. To this end, the openings corresponding to cooling down can be positioned within the air flow, or they can be located outside the air flow and emit the fluid such that it falls, is splashed or sprayed into the air flow. When the device is installed, the inlet to the air channel is provided on the same or a higher level than one or more openings corresponding to cooling. The air channel is preferably constructed such that a part thereof can lead air downwards and/or preferably towards a part of the air channel in which heating of the air due to solar radiation can take place, e.g. towards the interspace beneath the first (i.e., the outmost) layer of the hollow portion.

Consequently, the present invention provides an efficient device and technique in particular for cooling down fluid by utilising natural forces, sun and/or wind and without providing an energy consuming, noisy and vibrating apparatus such as a ventilator. In any case, additionally a ventilator may be provided for generating an air flow, e.g. within the shielded space and/or the air channel.

It is a further advantage of an embodiment including a layered structure as described above, that the heat inside the layered structure provides for an evaporation continuation within the air channel when fluid drops have entered it, for example due to the force of the air flow. Accordingly, the emission of fluid drops at an exit of the device is considerably reduced compared to conventional cooling devices, so that the risk of a dissemination of legionellas is minimised without the necessity of adding big amounts of poisonous disinfectants that are questionable from an ecological or sanitary point of view, or of providing a drip catcher.

The advantageous effects of such a layered hollow portion are particularly excited when the outmost layer of the included laminated material (i.e., the layer that, when the device is installed, can be exposed to solar radiation) is of a heat absorbing and/or heat conducting material such as a metal. This may provide a particularly heated interspace beneath the outmost layer as a part of the air path. It may also be desirable that the outmost layer includes a corrugated surface. In this case, variations in the effect of the solar radiation due to the course of the sun during the day can be reduced. Indeed, at any time of solar radiation, the corrugated surface may provide a range of various incidence angles of sunbeams, so that the ranges corresponding to different times may be similar.

In order to avoid, on the other hand, that the shielded space including the opening corresponding to cooling down is heated, a further layer included in such a hollow portion may be of an insulating material such as a plastic or foam or even a porous film.

In an exemplary embodiment, the at least one hollow portion is or forms part of an arrangement capable of shielding a space from sky, as detailed above. In this case, it is preferred that the air channel(s) included in such a hollow portion lead/s air from the space shielded by the arrangement through the hollow portion (and therewith, through the arrangement) towards the outside of the shielding arrangement. In this case, it is preferred that an air flow in the hollow portion extends into the shielded space, thus generating or intensifying air flow also in this space. Therein, preferably, fluid can be emitted by at least one of the one or more opening/s corresponding to cooling down. The air flow in the shielded space then raises the evaporation and, therewith, intensifies the cooling down of the fluid, in the manner explained above.

The device may comprise one or more flaps that can be operated so as to inhibit or reduce wind entering a space shielded from sky by a shielding arrangement forming part of the device. This may be useful to obviate damages caused by extreme emergences of wind, or when operations have to be carried out within the space. Such flaps may, for instance, be operable so as to close air inlets into the shielded space, or so as to conduct entering air away from fragile parts of the device.

Alternatively or additionally, in the embodiments including one or more hollow portions as detailed above, one or more flaps may be provided to impede a (strong) air flow within the layered structure. These flaps may be such that they can close or narrow a part of the air channel in the hollow portion, or such that, in the presence of strong wind, the strength of the wind operates these flaps, offering in this way an escape path for the wind, thus avoiding damages in the device. In the latter case, the flaps may be adjusted to a certain resistance, i.e. such that they open an escape path if and only if the wind's force exceeds a predetermined lower bound.

Flaps may also be provided that can facilitate maintenance tasks on the device, and/ or that can close one or more openings of the device, so as to inhibit rain intrusion. Additionally or alternatively, a protecting element may be arranged above one or more air inlet(s) or air outlet(s) of the device, or such opening(s) may be positioned in a vertical bordering of the device, so that rain intrusion is inhibited.

On the other hand, in some cases, rain intrusion may be advantageous and utilised to compensate a loss of fluid due to evaporation.

As a further embodiment of the invention, at least one of the one or more openings corresponding to cooling down may be provided within the layered structure of at least one of the one or more hollow portion(s) included in the device. By emitting fluid inside an interspace between the layers, the laminated structure can provide an evaporation chamber or channel. Preferably, in this case, the emitted fluid is also collected within the layered material. Possibly after some treatment of the collected fluid, the latter may then be conducted back to the one or more openings corresponding to cooling down. The device of such an embodiment may be such that a direction of the falling or splashed or sprayed fluid and a direction of said air flow coincide with each other within the interspace in which fluid is emitted. A possibility to achieve such coinciding directions can be to provide one or more air inlet(s) to the hollow portion on a higher layer than at least one of the one or more opening(s) corresponding to cooling down. Alternatively, the layered hollow portion may be such that a direction of the air flow crosses a direction of the falling or splashed or sprayed fluid within that interspace, which can possibly be achieved by providing one or more air inlets into the hollow portion below at least one of the one or more opening(s) corresponding to cooling down.

A device including the feature that fluid is emitted inside the hollow portion may provide the advantage of more flexibility with regard to the installation. For instance, such a construction of the device may simplify the device's installation on a sloped roof or underground, or it may facilitate that the device can be installed adjustable to the sun incidence, for example such that the sunbeam's angle of incidence remains the same or at least within a set range. Therewith, variations of the device's efficiency during the day may be reduced.

When the device comprises at least one hollow portion, the latter may also include an internal tube for delivering fluid, or the included air channel may be partially bordered by such a tube. In such an embodiment, the air flow's cooling effect on the fluid within the tube can be made use of. For instance, the fluid can be pre-cooled down by conducting it through such a tube, and after that, it can be conducted to the opening(s) corresponding to cooling down, achieving in this way higher cooling efficiency.

In a preferred embodiment of the invention, the at least one opening corresponding to warming up fluid is such that it emits fluid to a region exposed to solar radiation when the device is appropriately installed, so that the emitted fluid can be warmed up by the sun or by the device's surface, which may be solar heated due to being exposed to solar radiation. In particular, the one or more openings corresponding to warming up can be such that they emit fluid onto the device's hollow portion or an arrangement capable of shielding a space from sky.

The at least one hollow portion or the shielding arrangement of a device according to the present invention may include a corrugated and/or an optically transparent surface. As noted above, a corrugated surface can provide for different angles of incidence of sunbeams, thus reducing variations in the effect of the radiation due to the course of the sun during the day. Besides, such a surface may be advantageous when two or more devices of the present invention are installed next to each other, such that at least a part of the sunbeams that are incident on the corrugated surface of one of the devices is reflected, by the corrugated surface, onto the surface of another device of the arrangement of devices. This can be particularly advantageous in summer, when the sun beams may be powerful even when they are reflected, as in this case parts of air channels of more than one device can be heated by the arrangement, thus boosting an air flow in each of the respective air channels and, therewith, the evaporation and cooling down of fluid exposed to each of the air flows. Moreover, when fluid is flown on a corrugated surface of the device for being warmed up, this surface may provide for an extended area that can be exposed to solar radiation, so as to intensify the heating.

The shielding arrangement or the hollow portion may include an optically transparent surface. For example, the outmost layer of the hollow portion may include such a transparent part. This can allow illumination by daylight of a space shielded from sky by the arrangement, or of the inside of a hollow portion, which can be desirable for controlling the operation and arrangement as, e.g., the emission of fluid for cooling it down and/or the corresponding assembly.

Additionally or alternatively, a shielding arrangement or a hollow portion included in the device can be at least partially covered by an optically transparent layer. Such a transparent layer can provide for a greenhouse effect beneath the layer, which may increase the efficiency in warming up air within an air channel of the device or in warming up emitted fluid. That is, an optically transparent layer may be advantageous if the device is used for cooling down fluid, as an air flow in an air channel may be intensified, or it may be beneficial for warming up fluid. For instance, the optically transparent layer can be arranged such that, when at least one opening for warming up emits fluid, the path this fluid takes runs at least partially below the optically transparent layer, in an interspace that is particularly warmed due to the greenhouse effect. Consequently, the warming up of the fluid is improved. At the same time, the transparent layer reduces the risk that an object (such as a plastic bag, for example) falls into the emitted fluid and possibly impairs the fluid's flow on its further course, for example by blocking a further provided gutter.

Additionally or alternatively, a shielding arrangement or a hollow portion included in the device can be at least partially covered by a thermal conducting layer, such as a metallic surface. Such a layer will conduct thermal energy to the fluid, which may increase the efficiency in warming up emitted fluid. For instance, the thermal conducting layer can be arranged such that, when at least one opening for warming up emits fluid, the path this fluid takes runs at least partially between the shielding arrangement and the thermal conducting layer, with an interspace small enough so that the emitted fluid is in physical contact with both surfaces. The thermal conducting layer conducts thermal energy to the fluid, and consequently, the warming up of the fluid is improved. At the same time, the thermal conducting layer reduces the risk that an object (such as a plastic bag, for example) falls into the emitted fluid and possibly impairs the fluid's flow on its further course, for example by blocking a further provided gutter.

Even though the at least one opening corresponding to warming is such named herein, depending on the environmental temperature it might be used also for cooling down fluid. Indeed, if fluid is emitted, by the one or more openings, onto a shielding arrangement or a hollow portion in a cold environment, it might be cooled down rather than warmed up. This can be of special use at nights, since the thermal radiation of the device towards the sky at night helps reducing the temperature of the device's surface, which can, therefore, be used for cooling down the fluid.

The device may include an electrostatic material inside the hollow portion or inside the layered structure. This may be used to attract and collect fluid drops, further reducing the emission of fluid drops at an exit of the device.

It is a further aspect of the present invention, that various devices as described above can be installed so as to form a group. Preferably, these devices are arranged such that a part of the surface of at least one of the devices can reflect solar radiation onto a part of the surface of another device of the group, which may improve the exploitation of the incident sunbeams. For instance, and as mentioned above, a corrugated surface of at least a part of one or more of the devices may yield this effect.

According to a method of the present invention, a device for cooling down and warming up fluid is used, wherein the method may include the step of emitting fluid by one or more openings included in the device and corresponding to warming up, such that the emitted fluid is exposed to solar radiation or in contact with a surface exposed to solar radiation. Alternatively or additionally, the method may comprise the step of emitting fluid by one or more opening(s) included in the device and corresponding to cooling down, such that fluid falls or is splashed or sprayed through air, and an evaporation of the emitted fluid is intensified, by which heat is extracted from the fluid which is, thereby, cooled down.

Preferably, the method includes the step of exposing the used device to solar radiation while or before emitting fluid by the device's one or more opening(s) corresponding to cooling down, so that at least a part of the device is heated or has been heated by the sun, and an air flow is generated or intensified thereby, which boosts the evaporation of the emitted fluid and, therewith, the cooling down of the fluid.

It is noted that preferred embodiments of the present invention significantly rely on the utilisation of natural or alternative energy, and only the circulation transport of the fluid may possibly require some external power. Moreover, they can be inconspicuously installed, for instance, on the roof of a building. Therefore, the invention provides a device and method for cooling and/or warming up fluid that are highly advantageous with respect to ecology, architecture and urban design.

### Short description of the figures

Particular embodiments of the present invention are disclosed in the drawings. It is shown in
- Figure 1:: a view of an embodiment providing insight to a device for cooling down fluid;
- Figure 2:: a view of an embodiment of a device for cooling down and warming up fluid;
- Figure 3:: cross section of an exemplary embodiment of the invention
- Figure 4:: possible interior view of a shielded space
- Figure 5:: a view of another exemplary embodiment of a device for cooling down and warming up fluid;
- Figure 6:: another embodiment of a device for cooling down fluid;
- Figure 7:: a simplified cross section of a device for cooling down fluid; and
- Figure 8:: a possible arrangement of three devices.

### Detailed description of the figures

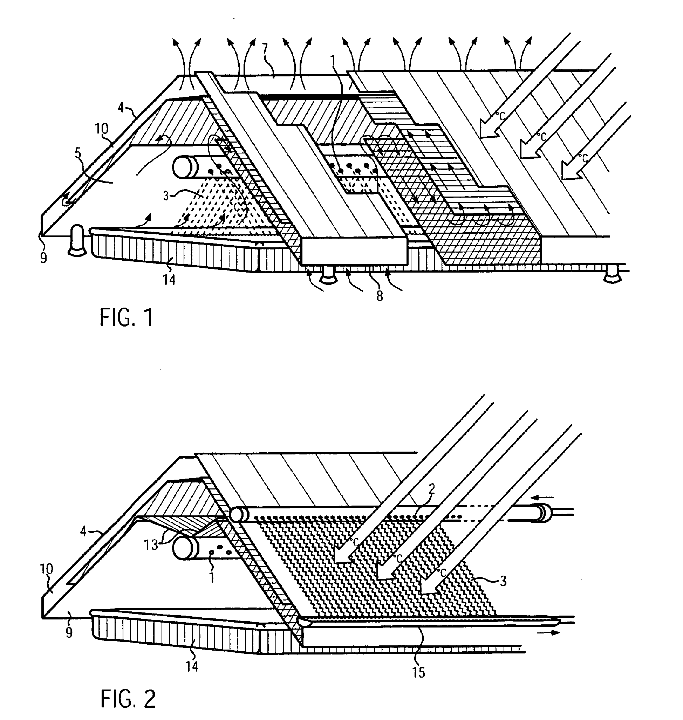

In Fig. 1, a device for cooling down fluid according to the present invention is depicted. It includes a tube having various openings 1 from which a liquid 3 is emitted such that it falls through the air and is collected in a collecting basin 14. Instead of such a basin, a surface onto which the device is installed may be provided for collecting the liquid.

A shielding arrangement 4 is further shown which shields a space 5 from the sky, and the tube as well as the collecting basin are located within the such shielded space. From outside, the shielding arrangement has the appearance of a pitched roof.

For purposes of explanation, the shielding arrangement is shown to be interrupted, which allows a view into the shielded space 5. Moreover, the figure shows the device without a closure that would correspond to a gable of a roof. It is noted that in general, the gable side of the device may be closed.

Each of the external areas corresponding to roof areas shown in Fig. 1 is the surface of the outmost layer of a laminated hollow portion 9 including three parallel layers which form an air channel 10. As indicated by the thin arrows, an air flow can be generated within the shielded space 5 and its shielding arrangement 4. More precisely, air can enter the shielded space 5 through openings 8 at the bottom of the shielding arrangement 4, next to the collecting basin 14 and on a level lower than the tube emitting fluid. Moreover, air may pass the shielded space 5 and enter the hollow portions 9 on a level higher than the tube emitting fluid. It may then take its way firstly through an interspace between the innermost layer and the middle layer of each of these hollow portions 9, and then through an interspace between the middle layer and the outmost layer. Therefrom, it may escape into the outside of the device at an almost upmost position of the shielding arrangement 4, namely through openings 7.

As indicated by the thick arrows, the external surface of the hollow portion facing the viewer of the picture is exposed to solar radiation. As a consequence, in particular, air in the interspace between the outmost and the middle layers of the hollow portion will be heated, so that an air flow is generated or intensified in the interspace, which extends to the whole air channel 10 and the shielded space 5. That is, due to the solar radiation, the temperature of the air will increase during its path through the air channel, so that a stack effect is excited as detailed above. Within the shielded space 5, the air flow's direction is at least partially contrary to the direction of the emitted, falling or splashed or sprayed liquid, which will be cooled down due to the thus activated or raised evaporation process.

While in Fig. 1 only one tube for providing liquid to the openings 1 is shown, there may be two (or more) such tubes. Each tube is provided with one or more opening(s) form which the liquid is emitted. The emitted liquid of one tube may collide with liquid emitted from the other tube to thereby provide droplets.

Fig. 2 shows a device having a similar roof-like shielding arrangement 4 as the device illustrated in Fig. 1. Again for purposes explanation, also the device of Fig. 2 is not shown to be closed from its gable side, so that a part of the space shielded by the shielding arrangement 4 is visible. The device may, nevertheless, be closed at one or both gable sides.

In addition to the features of the device shown in Fig. 1, the device illustrated in Fig. 2 includes, on each of its external areas, an outside tube for emitting fluid (as in particular, a liquid) onto the external area, in order to warm up the fluid. The figure shows liquid being emitted by a plurality of openings 2 corresponding to warming up. The emitted liquid flows down on the external area, where it is warmed up by sunbeams indicated by the thick arrows and the solar heated external area. At the bottom of the external area, a gutter 15 is provided which collects the liquid. The gutter and the outside tube can form part of a circulation arrangement which can include a pump unit to conduct the liquid collected in the gutter back to the openings 2 (corresponding to warming up) in the outside tube. Instead of a gutter, a surface onto which the device is mounted may be used for collecting the liquid.

Alternatively, and depending on the environmental temperature and/or the absence of direct solar radiation, openings 2 might be used also for cooling down fluid.

Moreover, inside the device, a tube having a plurality of openings 1 corresponding to cooling down is shown, as in Fig. 1. In contrast thereto, however, at the time illustrated in Fig. 2, no fluid is emitted. Moreover, two flaps 13 are depicted above the tube in the shielded space, wherein the flaps are operated so as to inhibit air entering the air channel 10 within the hollow portion 9 of the shielding arrangement. Thereby it is possible to avoid an air flow in the air channel 10, which would lead to an undesired cooling of the external surface from below while the device is used for warming up fluid. Flaps may also be provided at another position (alternatively or additionally). E.g. flaps may be provided at the openings 7 and/or openings 8, and/or in the hollow portions 9 in order to close or reduce these openings.

The external surface (which may be heated by solar radiation) might be covered with a transparent layer (not shown) in order to maintain the solar heat close to the device. The solar radiation may penetrate such a transparent layer without mayor losses and heat up the external surface. This transparent layer may establish a greenhouse effect in order to more efficiently warm up the liquid.

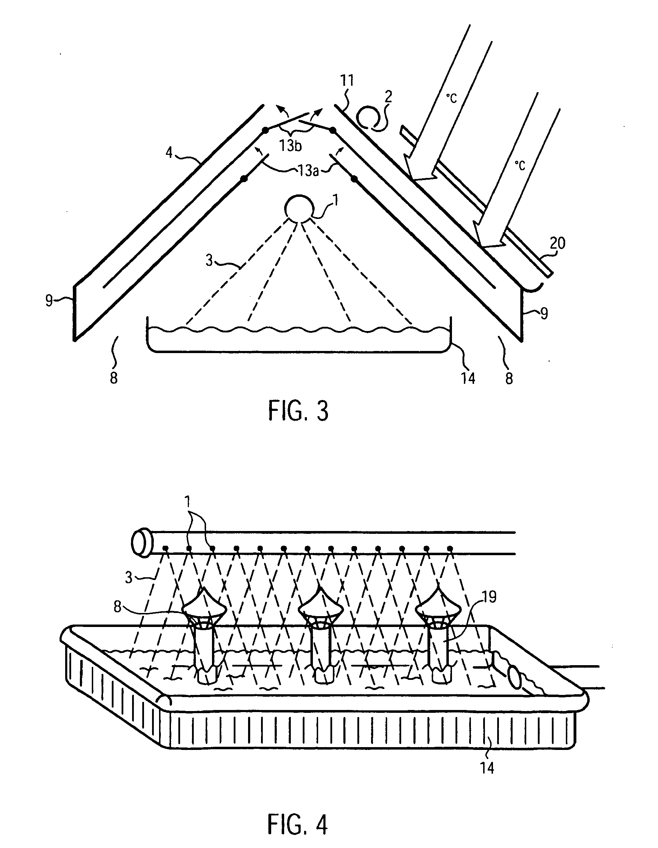

In Fig. 3, a simplified cross section of an exemplary device according to the invention is illustrated. The depicted device includes two layered hollow portions 9 that form part of a roof-like shielding arrangement 4. The outmost layer 11 of the hollow portion depicted on the right hand side is shown to be partially covered by an optically transparent surface 20. As indicated by the thick arrows, the shielding arrangement is radiated by the sun on this side, and the sunbeams penetrate the optically transparent layer 20. Even though openings 1 corresponding to cooling down are shown to emit a fluid 3, the depicted device may serve also for warming up fluid. Indeed, it provides of openings 2 corresponding to warming up. When these openings emit fluid (this situation is not shown), this fluid will flow down on the outmost layer 11 of the hollow portion at the right hand side (in the perspective provided by the figure), while the fluid's path is partially covered by an optically transparent surface 20. As explained above, between the surface 20 and the outmost layer 11, a greenhouse effect may be provoked, which may further increase the warming up of the flowing fluid.

Although a particular constellation is shown in Figure 3, each of a transparent layer 20 and one or more opening(s) 2 corresponding to warming up could be provided, independently of each other, on one or various hollow portions 9 or sides of a shielding arrangement. In particular, in the perspective of Fig. 3, in addition to the hollow portion that is seen on the right-hand side, also the hollow portion on the left-hand side could be partially covered with a transparent layer 20, and/or also above that hollow portion, opening(s) 2 corresponding to warming up might be provided.

The device further includes two flaps 13a and two flaps 13b. As indicated by the small arrows, each of these flaps may move in the respective directions. In case of the lower flaps 13a, both at the left hand side and at the right hand side, such a movement will close an air inlet into the respective hollow portion. In case of the upper flaps 13b, the movement will open an escape path through which wind may exit directly the device, without entering the hollow portions on either side. Both flaps 13a and 13b may be operated by the wind entering through openings 8 at the bottom of the device, in cases when the wind's force exceeds a predetermined lower bound.

Instead of a pair of flaps 13b, only a single flap or more than two flaps may be provided to open an escape path. Moreover, flaps 13a and 13b may each be provided or not, independently of each other.

Furthermore, although Figure 3 depicts a device that provides of both an optically transparent layer and flaps, each of these elements may be included independently of the inclusion of a respective other one.

Fig. 4 provides for an interior view of a shielded space of an exemplary embodiment of the present invention. Openings 1 corresponding to cooling down are shown to emit a liquid 3, which is then collected in a collecting basin 14. Three tubes 19 are further shown to penetrate from below the collecting basin and the liquid collected therein. Through such tubes, air may be conducted from remote locations into the shielded space, so that the ends of the tubes within said space serve as air inlets 8 into it. In particular, cool air may be released from a building, for example, in order to increase the cooling down of the liquid.

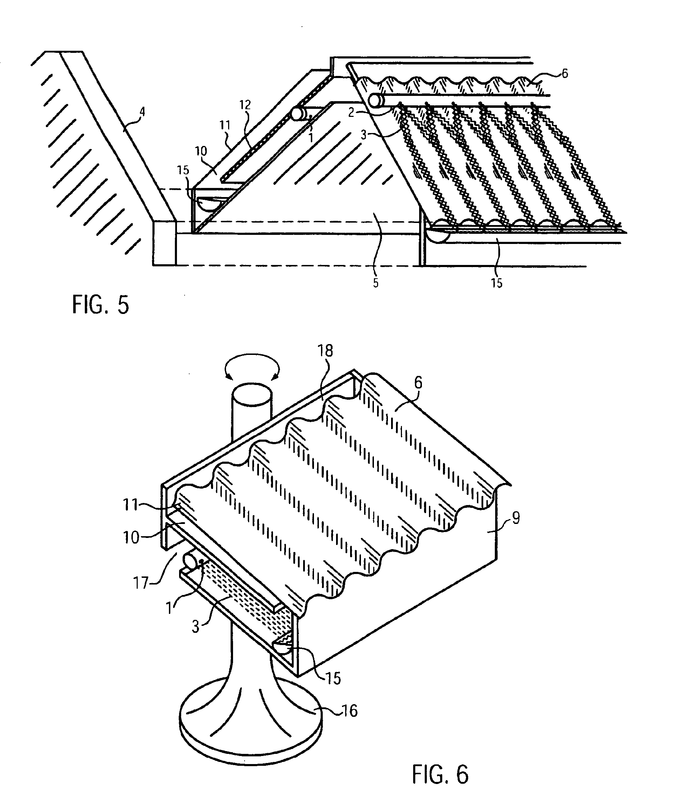

Fig. 5 shows a device having a roof-like shielding arrangement 4 similar to those of Figures 1 and 2. A gable closure is indicated at the left side, which is for closing the device at its side. In order to provide a perspective of the shielded space, however, the part of the picture that represents the gable is shifted sideways.

Also the device shown in Fig. 5 is for both warming up and cooling down fluid. On the part of the roof that is facing the viewer of the figure, a corrugated surface 6 is illustrated. Thereon, a tube having various openings 2 corresponding to warming up fluid is provided, which emit liquid 3. As mentioned above, depending on the environmental temperature and/or the absence of direct solar radiation, the such emitted fluid may be cooled down rather than warmed up, in spite of the notation "opening corresponding to warming up" used herein. The liquid is shown to flow down the corrugated surface, and to then be collected by a gutter 15. The corrugations, in general, may be such that an optimal trade-off is reached between energy transmission and mechanical resistance. The distance between two neighbouring valleys can be more than 1 cm or 5cm and/or less than 30cm or 20cm.

The far side of the shielding arrangement 4 (in the given perspective) is illustrated to include a laminated hollow portion including an air path 10, as that described above with respect to Fig. 1. Additionally, the middle layer of the laminated hollow portion is indicated, by the wiggly line, to be of a heat insulating material 12.

Moreover, and in contrast to the device shown in the previous figures, the hollow portion of the device illustrated in Fig. 5 includes an internal tube having one (and, although not visible, preferably more) opening(s) 1 corresponding to cooling down. Therewith, fluid may be emitted within the air channel 10 inside the hollow structure. Moreover, a second gutter 15 is shown, that may serve to collect the such emitted fluid. In the depicted moment, no fluid is emitted inside the hollow structure. However, when the outmost layer 11 of the device is exposed to solar radiation, convection may be excited as described above, so that, when further fluid to be cooled down is emitted within the air channel, the evaporation of the fluid will be intensified or generated by the generated air flow.

It is to be noted, that the corrugations shown in Fig. 5 may also be provided independently of the hollow portion 9 and the air channel 10 shown in Fig. 5. For instance, the devices shown in Fig. 1 or 2 may be provided with the corrugations, on each or any of the external areas.

In Fig. 6, a simplified device is sketched that includes a laminated hollow portion 9. This portion is similar to a box having a middle layer between the upper and the lower surface and parallel to them. The left side area of the box (from the viewer's perspective) is not shown, in order to deliver insight into the box. However, in general the device will be closed at this side.

The hollow portion has a slit 17 in its lower surface and a slit 18 in its upper surface, which can serve as an air inlet and an air outlet, respectively, into or from the hollow portion. Three layers thereof border an air channel 10, which leads from the air inlet slit 17 through the interspaces between the layers and to the air exit outlet 18. The upmost layer of the hollow portion is shown to have a corrugated surface 6.

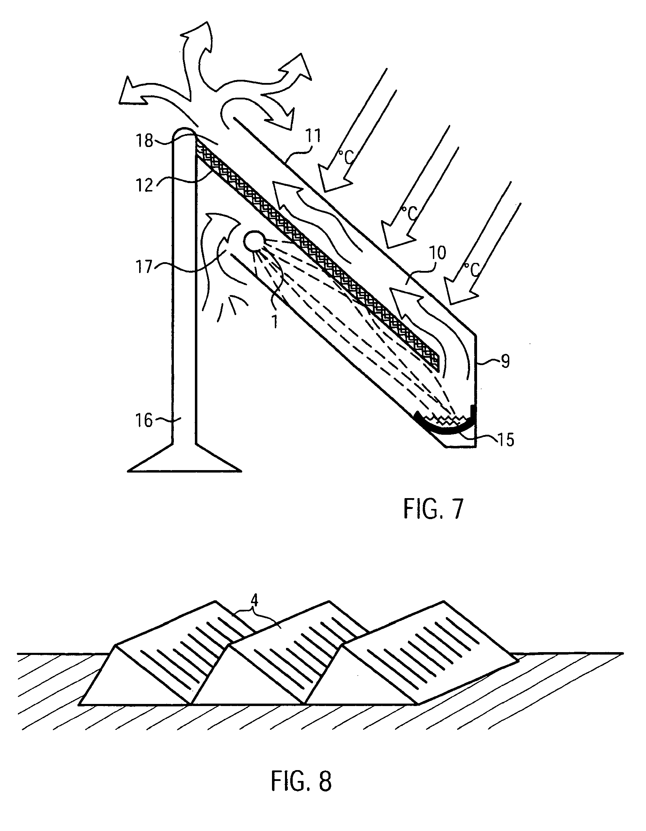

Inside the hollow portion, between its lower and its middle layer, a tube is shown that has an opening 1 (preferably various, even though not shown) emitting fluid 3. The fluid is splashed or sprayed through the air in the air channel and collected in a gutter 15. By exposing the corrugated surface of the hollow portion to solar radiation, an air flow will be generated or intensified within the air channel. This is particularly illustrated in Fig. 7, which provides a section view of a device of the same or a similar structure as that depicted in Fig. 6: The incidence of sunbeams, indicated in Fig. 6 by the straight thick arrows, will warm up the interspace between the surface 11 exposed to solar radiation and the middle layer 12 (which may be of a heat insulating material). As a consequence, an air buoyancy will be generated or intensified within that interspace, which results in an air draught from the air inlet 17 through the air channel 10 and to the air outlet 18, as indicated by the curling thick arrows. This air flow boosts the evaporation of the liquid that is emitted between the lower and the middle layer within the air channel inside the hollow portion. The evaporation, on its part, results in releasing heat into the air, which then exits the hollow portion through the air outlet 18. The remaining liquid is cooler than the liquid before being emitted.

Both in Figure 6 and in Figure 7, a holding fixture 16 is shown, on which the hollow portion is mounted such that its surface is inclined with respect to the ground. The holding fixture may include a fluid pipe (not shown) for supplying and/or discharging fluid. Moreover, it may be rotatable, as indicated by the open circle arrow in Fig. 6, so that it can turn around either completely or by a fixed angle smaller than 360°. Thereby, the installation of the hollow portion may be variable, so that the hollow portion may be orientated advantageously with respect to the sun. For instance, the incidence angles of the sunbeams may be maintained in a certain range, by rotating the hollow portion so as to follow the sun's course during the day. Alternatively or additionally, the angle of inclination of the hollow portion with respect to the ground may be variable. Either one of these features may increase the device's efficiency during the day.

The device may also be attached to an (inclined) roof of a building in a fixed position (which can not be varied). For this purpose, the device preferably does not have a holding fixture as shown in Fig. 6 or 7. It may be attached with a plurality of fasteners.

In Fig. 8, an assembly of three devices is indicated. Each of the devices provides of a roof-like shielding arrangement 4. The positioning of the devices with respect to each other may cause that sunbeams that are reflected by one of the external areas may be directed to the external area of another one of the devices in the group. Consequently, also the reflected sunbeams can be utilised and are, therefore, not lost with respect to the operation of the assembly.

The assembly may be e.g. mounted/mountable on a substantially horizontal roof, which e.g. is inclined by not more than 20° with respect to the ground. This roof will also allow to collect the liquid emitted by the openings.

## Claims

1. Device for cooling down and warming up fluid,
wherein for each of cooling down and warming up, the device provides of at least one opening (1; 2) for emitting fluid (3),
wherein the at least one opening corresponding to cooling down is such that emitted fluid falls or is splashed or sprayed through air,
and wherein the device comprises a hollow portion (9) that includes one or more air channel/s (10), wherein the hollow portion (9) further includes openings (17; 18) by which at least one of the air channel/s can take air in and let air out,
**characterised in that**
an air flow through the at least one air channel can be generated such that air is released from the air channel in an upmost or almost upmost position (18) thereof,
and when the device is installed, the inlet (17) to the at least one air channel is provided on the same or a higher level than one ore more opening/s (1) corresponding to cooling.

2. Device according to claim 1, wherein the at least one opening for emitting fluid corresponding to cooling down and/ or the at least one opening for emitting fluid corresponding to warming up is such that fluid is emitted by spraying it, e.g. with one or a plurality of spray nozzle/s.

3. Device according to one of claims 1 or 2, wherein the device further comprises a shielding arrangement (4) capable of shielding a space (5) from sky, and the at least one opening corresponding to cooling down (1) is such that emitted fluid at least partially falls or is splashed or sprayed within the shielded space.

4. Device according to claim 3, further including one or more openings (7; 8) for air that can serve as an air inlet or an air outlet into or from the shielded space, respectively,
wherein the device preferably can be or is installed such that at least one opening (8) for air is located lower than at least one opening corresponding to cooling down, and at least one opening (7) for air is located higher than at least one opening corresponding to cooling down.

5. Device according to one of claims 1 to 4,
wherein the at least one hollow portion or, if the device includes the features of claim 3, the shielding arrangement includes one or more corrugated (6) or optically transparent surface/s (20) or is at least partially covered therewith,
and/or wherein the device includes, inside the hollow portion (10), an electrostatic material used to attract and collect fluid drops.

6. Device according to claim 1, wherein the hollow portion includes various layers forming boundaries for the one or more air channel/s within the portion, such that a first one (11) of the layers can be exposed to solar radiation,
wherein the exposure of said layer to solar radiation preferably generates or intensifies an air flow within the hollow portion,
and wherein the first layer is preferably of a heat absorbing and /or heat conducting material such as a metal, and/or wherein a second layer (12) of the hollow material is preferably of a heat insulating material such as a plastic or a foam.

7. Device according to one of claims 1 to 6 with the additional feature of claim 3, wherein the hollow portion is the shielding arrangement or a part thereof,
and wherein air can preferably be conducted from the space (5) shielded by the shielding arrangement, through the one or more air channel/s (10) and to the outside of the shielded space, preferably generating or intensifying thereby an air flow within the shielded space.

8. Device according to one of claims 1 to 7, wherein the at least one opening (1) corresponding to cooling down is such that it can emit fluid inside the hollow portion (9) or such that it can emit fluid by splashing or spraying it into the hollow portion, so that fluid falls or is splashed or sprayed within at least a part of the one or more air channel/s (10) within the hollow portion.

9. Device according to one of claims 1 to 8, wherein the hollow portion (9) internally includes or is partially bordered by at least one tube or a part thereof, wherein the tube is for delivering fluid towards or from the at least one opening (1) corresponding to cooling down.

10. Device according to one of claims 1 to 9, wherein the device further comprises one or more flaps (13; 13a; 13b) which, when operated accordingly, are able to reduce wind intake into the shielded space (5), when the device has the feature of claim 3,
and/or to reduce an air flow within the hollow portion (9), by closing or narrowing one or more opening/s of the hollow portion,
and/or to provide an escape path for air,
and/or to provide an access in order to facilitate maintenance tasks.

11. Device according to any of claims 1 to 10, wherein the at least one opening corresponding to warming up is such that it can emit fluid onto the shielding arrangement (4) or onto the hollow portion (9), respectively, so that the fluid can take up heat from the environment and/or from the device.

12. Device according to one of claims 1 to 11, further comprising at least one collecting basin (14) and/or gutter (15) for collecting fluid emitted from the at least one opening corresponding to warming up and/or to cooling down fluid.

13. Arrangement of two or more devices according to one of claims 1 to 12 that are installed, wherein at least one of the devices is preferably installed such that a part of its surface can reflect solar radiation onto another one of the devices.

14. Method for changing a temperature of fluid
wherein a device for cooling down and warming up fluid (3) is used, the device including one or more openings (2) corresponding to warming up and/or one or more openings (1) corresponding to cooling down,
wherein fluid is emitted by the one or more opening/s (1) corresponding to cooling down such that the fluid falls or is splashed or sprayed through air, so that an evaporation of the emitted fluid is intensified due to which heat is extracted from the fluid which is, thereby, cooled down,
the method further comprising exposing the device to solar radiation,
**characterised in that**
due to a part of the device being heated by solar radiation, an air flow is generated or intensified which intensifies the evaporation of the emitted fluid and hence the cooling thereof, wherein the air flows through one or more air channel/s (10) included in a hollow portion (9) comprised by the device, the hollow portion including openings (17; 18) by which the at least one air channel takes air in and lets air out,
the air is released from the air channel/s in an upmost or almost upmost position (18) thereof, and the inlet (17) to the air channel is provided on the same or a higher level than the one ore more openings corresponding to cooling.

15. Method according to claim 14,
wherein the fluid is pre-cooled down by conducting it through at least one tube internally included in the hollow portion,
and/or wherein air is conducted from another location towards the one or more openings (17) of the hollow portion or, when the device comprises a shielding arrangement (4) capable of shielding a space (5) from the sky, to at least one opening (8) serving as an air inlet into the shielded space,
wherein preferably air such as outgoing air of a building or engine that has more or less enthalpy than the environment is released from the other location and conducted into the device.

## Patentansprüche

1. Vorrichtung zum Abkühlen und Aufwärmen einer Flüssigkeit,
wobei die Vorrichtung wenigstens eine Öffnung (1; 2) zur Ausgabe der Flüssigkeit (3) für jedes von Abkühlen und Erwärmen vorsieht,
wobei die wenigstens eine zum Abkühlen korrespondierende Öffnung so ausgebildet ist, dass die ausgegebene Flüssigkeit fällt oder durch die Luft gespritzt oder gesprüht wird, und wobei die Vorrichtung einen hohlen Bereich (9) umfasst, der einen oder mehrere Luftkanal/kanäle (10) umfasst, wobei der hohle Bereich (9) weiterhin Öffnungen (17; 18) umfasst, wodurch wenigstens einer der Luftkanal/kanäle Luft einziehen oder Luft auslassen kann,
**dadurch gekennzeichnet, dass**
ein Luftstrom durch den wenigstens einen Luftkanal so erzeugt werden kann, dass Luft aus dem Luftkanal in einer höchsten oder nahezu höchsten Position (18) des Luftkanals aus diesem entlassen wird,
und, wenn die Vorrichtung installiert ist, der Einlass (17) zu dem wenigstens einen Luftkanal auf der selben oder einer höheren Höhe als die eine oder mehreren zum Abkühlen korrespondierenden Öffnung/en (1) vorgesehen ist.

2. Vorrichtung gemäß Anspruch 1, wobei die wenigstens eine Öffnung zur Ausgabe von Flüssigkeit die zum Abkühlen korrespondiert und/oder die wenigstens eine Öffnung zur Ausgabe von Flüssigkeit die zum Erwärmen korrespondiert so ausgestaltet ist, dass die Flüssigkeit ausgegeben wird indem sie gesprüht wird, beispielsweise mit einer oder einer Vielzahl von Sprühdüse/n.

3. Vorrichtung nach einem der Ansprüche 1 oder 2, wobei die Vorrichtung weiterhin eine Abschirmungseinrichtung (4) umfasst die dazu geeignet ist einen Bereich (5) vom Himmel abzuschirmen, und die wenigstens eine Öffnung die zum Abkühlen korrespondiert (1) so ist, dass ausgegebene Flüssigkeit wenigstens teilweise in den abgeschirmten Bereich fällt oder gespritzt oder hineingesprüht wird.

4. Vorrichtung nach Anspruch 3, weiterhin umfassend eine oder mehrere Öffnungen (7; 8) für Luft die als Lufteinlass oder Luftauslass in oder von dem abgeschirmten Bereich dienen können,
wobei die Vorrichtung vorzugsweise installiert werden kann oder ist, sodass wenigstens eine Öffnung (8) für Luft tiefer als eine Öffnung die zum Abkühlen korrespondiert verortet ist, und wenigstens eine Öffnung (7) für Luft höher als wenigstens eine Öffnung die zum Abkühlen korrespondiert verortet ist.

5. Vorrichtung gemäß einem der Ansprüche 1 bis 4, wobei der wenigstens eine hohle Bereich, oder, wenn die Vorrichtung die Merkmale von Anspruch 3 umfasst, die Abschirmungseinrichtung eine oder mehrere gewellte (6) oder optisch transparente Oberfläche/n (20) umfasst oder zumindest teilweise damit bedeckt ist,
und/oder wobei die Vorrichtung innerhalb des hohlen Bereichs (10) ein elektrostatisches Material, das zum Anziehen und Sammeln von Flüssigkeitstropfen genutzt wird, umfasst.

6. Vorrichtung gemäß Anspruch 1, wobei der hohle Bereich mehrere Schichten, die Begrenzungen für den einen oder mehrere Luftkanal/kanäle innerhalb des Bereichs bilden, umfasst, sodass eine erste (11) der Schichten Sonnenstrahlung ausgesetzt werden kann,
wobei das der Sonnenstrahlung Aussetzen der besagten Schicht vorzugsweise einen Luftstrom innerhalb des hohlen Bereichs erzeugt oder verstärkt,
und wobei die erste Schicht vorzugsweise aus einem wärmeabsorbierenden und/oder wärmeleitenden Material wie Metall besteht, und/oder wobei eine zweite Schicht (12) des hohlen Materials vorzugsweise aus einem wärmeisolierenden Material wie Plastik oder Schaumstoff besteht.

7. Vorrichtung gemäß einem der Ansprüche 1 bis 6 mit dem zusätzlichen Merkmal von Anspruch 3, wobei der hohle Bereich die Abschirmungseinrichtung oder ein Teil davon ist,
und wobei Luft vorzugsweise von dem Bereich (5) der durch die Abschirmeinrichtung abgeschirmt wird, durch den einen oder mehrere Luftkanal/kanäle (10) und zur Außenseite des abgeschirmten Bereichs geleitet werden kann, vorzugsweise dabei einen Luftstrom innerhalb des abgeschirmten Bereichs erzeugend oder intensivierend.

8. Vorrichtung gemäß einem der Ansprüche 1 bis 7, wobei die wenigstens eine zum Abkühlen korrespondierende Öffnung (1) so ist, dass sie Flüssigkeit innerhalb des hohlen Bereichs (9) auslassen kann oder so, dass sie Flüssigkeit in den hohlen Bereich durch Sprühen oder Spritzen auslassen kann, sodass Flüssigkeit in wenigstens einen Teil des einen oder mehreren Luftkanals/kanäle (10) innerhalb des hohlen Bereichs hineinfällt oder hineingespritzt oder hineingesprüht wird.

9. Vorrichtung gemäß einem der Ansprüche 1 bis 8, wobei der hohle Bereich (9) innerhalb umfasst oder teilweise durch wenigstens eine Leitung oder einen Teil davon begrenzt ist, wobei die Leitung zur Abgabe von Flüssigkeit durch oder von der wenigstens einen zum Abkühlen korrespondierenden Öffnung (1) vorgesehen ist.

10. Vorrichtung gemäß einem der Ansprüche 1 bis 9, wobei die Vorrichtung weiterhin eine oder mehrere Klappen (13; 13a; 13b), die, wenn entsprechend betrieben, geeignet sind die Windaufnahme innerhalb des abgeschirmten Bereichs (5), wenn die Vorrichtung das Merkmal von Anspruch 3 enthält, zu reduzieren,
und/oder einen Luftstrom innerhalb des hohlen Bereichs (9) durch Schließen oder Verengen einer oder mehrerer Öffnung/en des hohlen Bereichs zu reduzieren,
und/oder einen Ausströmweg für Luft bereitzustellen,
und/oder einen Zugang zur Durchführung von Wartungsarbeiten bereitzustellen.

11. Vorrichtung gemäß einem der Ansprüche 1 bis 10, wobei die wenigstens eine zum Erwärmen korrespondierende Öffnung so ist, dass sie Flüssigkeit auf die Abschirmungseinrichtung (4) oder auf den hohlen Bereich (9) ausgeben kann, sodass die Flüssigkeit Wärme aus der Umgebung und/oder von der Vorrichtung aufnehmen kann.

12. Vorrichtung gemäß einem der Ansprüche 1 bis 11, weiterhin umfassend wenigstens ein Sammelbecken (14) und/oder eine Rinne (15) zum Sammeln von durch die wenigstens eine zum Abkühlen korrespondierende Öffnung oder zum Erwärmen korrespondierende Öffnung ausgegebene Flüssigkeit.

13. Anordnung von zwei oder mehreren installierten Vorrichtung gemäß einem der Ansprüche 1 bis 12, wobei wenigstens eine der Vorrichtungen vorzugsweise so installiert ist, dass ein Teil ihrer Oberfläche Sonnenstrahlung auf eine der anderen Vorrichtungen reflektieren kann.

14. Verfahren zum Ändern einer Temperatur einer Flüssigkeit,
wobei eine Vorrichtung zum Abkühlen oder Erwärmen einer Flüssigkeit (3) verwendet wird, die Vorrichtung umfassend eine oder mehrere zum Erwärmen korrespondierende Öffnungen (2) und/oder eine oder mehrere zum Abkühlen korrespondierende Öffnungen (1),
wobei Flüssigkeit durch die eine oder mehrere zum Erwärmen korrespondierende Öffnung/en (1) ausgegeben wird, sodass die Flüssigkeit durch Luft fällt, gespritzt oder gesprüht wird, sodass eine Verdunstung der ausgelassenen Flüssigkeit intensiviert wird, durch welche Wärme aus der Flüssigkeit extrahiert wird, wodurch diese gekühlt wird, das Verfahren weiterhin umfassend Aussetzen der Vorrichtung der Sonnenstrahlung, **dadurch gekennzeichnet, dass**
durch einen durch Sonnenstrahlung erhitzter Teil der Vorrichtung ein Luftstrom erzeugt oder intensiviert wird, der die Verdunstung der ausgelassenen Flüssigkeit und dadurch ihre Kühlung intensiviert, wobei die Luft durch einen oder mehrere Luftkanal/kanäle (10) die in einem hohlen Bereich (9), der in der Vorrichtung enthalten ist, strömt, der hohle Bereich umfassend Öffnungen (17; 18) durch die wenigstens ein Luftkanal Luft aufnimmt und Luft abgibt,
die Luft durch den/die Luftkanal/kanäle in einer höchsten oder nahezu höchsten Position (18) davon ausgelassen wird, und der Einlass (17) für den Luftkanal auf der selben oder einer höheren Höhe als die eine oder mehrere zum Abkühlen korrespondierenden Öffnung/en vorgesehen ist.

15. Verfahren gemäß Anspruch 14,
wobei die Flüssigkeit durch Leiten durch wenigstens eine innerhalb des hohlen Bereichs enthaltene Leitung vorgekühlt wird,
und/oder wobei Luft von einer anderen Position in Richtung der einen oder mehreren Öffnung/en (17) des hohlen Bereichs, oder, wenn die Vorrichtung eine Abschirmungseinrichtung (4) die zum Abschirmen eines Bereichs (5) vom Himmel geeignet ist umfasst, zu wenigstens einer Öffnung (8) die als Lufteinlass in den abgeschirmten Bereich dient, geleitet wird,
wobei vorzugsweise Luft oder ausgehende Luft von einem Gebäude oder einer Maschine die mehr oder weniger Enthalpie als die Umgebung aufweist von der anderen Position entlassen wird und in die Vorrichtung geleitet wird.

## Revendications

1. Dispositif pour refroidir et chauffer un fluide, étant précisé que pour le refroidissement et pour le chauffage, le dispositif dispose d'au moins une ouverture (1 ; 2) pour l'émission d'un fluide (3),
que la ou les ouvertures correspondant au refroidissement sont telles que le fluide émis tombe ou est projeté ou pulvérisé dans l'air,
et que le dispositif comprend une partie creuse (9) qui comporte un ou plusieurs conduits d'air (10), et que la partie creuse (9) comporte par ailleurs des ouvertures (17 ; 18) par lesquelles le ou les conduits d'air peuvent laisser entrer et sortir l'air,
**caractérisé en ce qu'**un écoulement d'air dans le ou les conduits d'air peut être produit de telle sorte que de l'air soit évacué du ou des conduits d'air à un endroit (18) de ceux-ci qui est situé en haut ou presque en haut, et que lorsque le dispositif est installé, l'ouverture d'entrée (17) vers le ou les conduits d'air se trouve au même niveau ou plus haut qu'une ou plusieurs ouvertures (1) correspondant au refroidissement.

2. Dispositif selon la revendication 1, étant précisé que la ou les ouvertures pour l'émission du fluide correspondant au refroidissement et/ou la ou les ouvertures pour l'émission du fluide correspondant au chauffage sont telles que le fluide est émis par pulvérisation, par exemple avec un ou plusieurs pulvérisateurs.

3. Dispositif selon l'une des revendications 1 ou 2, étant précisé que le dispositif comprend par ailleurs un dispositif de protection (4) apte à protéger un espace (5) par rapport au ciel, et que la ou les ouvertures correspondant au refroidissement (1) sont telles que le fluide émis tombe ou est projeté ou pulvérisé au moins en partie dans l'espace protégé.

4. Dispositif selon la revendication 3, comprenant par ailleurs une ou plusieurs ouvertures (7 ; 8) pour
l'air, qui peuvent servir d'entrées ou de sorties d'air dans l'espace protégé ou à partir de celui-ci, respectivement,
étant précisé que le dispositif, de préférence, peut être installé ou est installé de telle sorte qu'au moins une ouverture (8) pour l'air se trouve plus bas qu'au moins une ouverture correspondant au refroidissement, et qu'au moins une ouverture (7) pour l'air se trouve plus haut qu'au moins une ouverture correspondant au refroidissement.

5. Dispositif selon l'une des revendications 1 à 4, étant précisé que la ou les parties creuses ou, si le dispositif présente les caractéristiques de la revendication 3, le dispositif de protection comportent une ou plusieurs surfaces ondulées (6) ou optiquement transparentes (20) ou sont au moins en partie couvertes par celles-ci,
et/ou que le dispositif comporte, à l'intérieur de la partie creuse (10), un matériau électrostatique utilisé pour attirer et recueillir les gouttes de fluide.

6. Dispositif selon la revendication 1, étant précisé que la partie creuse comporte différentes couches qui forment des limites pour le ou les conduits d'air à l'intérieur de ladite partie, de telle sorte qu'une première couche (11) puisse être exposée au rayonnement solaire,
que l'exposition de ladite couche au rayonnement solaire produit ou intensifie de préférence un écoulement d'air à l'intérieur de la partie creuse,
et que la première couche est de préférence composée d'un matériau absorbant la chaleur et/ou d'un matériau conducteur de chaleur tel qu'un métal, et/ou qu'une deuxième couche (12) du matériau creux est de préférence composée d'un matériau calorifuge tel qu'une matière plastique ou une mousse.

7. Dispositif selon l'une des revendications 1 à 6 avec la caractéristique supplémentaire de la revendication 3, étant précisé que la partie creuse est constituée par le dispositif de protection ou une partie de celui-ci,
et que l'air peut de préférence être amené de l'espace (5) protégé par le dispositif de protection, en passant par le ou les conduits d'air (10), vers l'extérieur dudit espace protégé, de préférence en produisant ou en intensifiant ainsi un écoulement d'air à l'intérieur de l'espace protégé.

8. Dispositif selon l'une des revendications 1 à 7, étant précisé que la ou les ouvertures (1) correspondant au refroidissement sont telles qu'elles peuvent émettre un fluide à l'intérieur de la partie creuse (9) ou émettre en fluide en le projetant ou en le pulvérisant dans la partie creuse, de sorte que le fluide tombe ou soit projeté ou pulvérisé à l'intérieur d'une partie au moins du ou des conduits d'air (10) à l'intérieur de la partie creuse.

9. Dispositif selon l'une des revendications 1 à 8, étant précisé que la partie creuse (9) renferme ou est en partie bordée par au moins un tube ou une partie de celui-ci, et que le tube est destiné à acheminer un fluide en direction ou à partir de la ou des ouvertures (1) correspondant au refroidissement.

10. Dispositif selon l'une des revendications 1 à 9, étant précisé qu'il comprend par ailleurs un ou plusieurs volets (13 ; 13a ; 13b) qui, lorsqu'ils sont commandés de manière appropriée, sont aptes
à réduire l'entrée du vent dans l'espace protégé (5), quand le dispositif a la caractéristique de la revendication 3,
et/ou à réduire un écoulement d'air à l'intérieur de la partie creuse (9), en fermant ou rétrécissant une ou plusieurs ouvertures de la partie creuse,
et/ou à former une trajectoire d'évacuation pour l'air,
et/ou à permettre un accès afin de faciliter les tâches de maintenance.

11. Dispositif selon l'une des revendications 1 à 10, étant précisé que la ou les ouvertures correspondant au chauffage sont telles qu'elles peuvent émettre un fluide sur le dispositif de protection (4) ou sur la partie creuse (9), respectivement, de sorte que le fluide peut absorber de la chaleur à partir de l'environnement et/ou du dispositif.

12. Dispositif selon l'une des revendications 1 à 11, comprenant par ailleurs au moins un réservoir collecteur (14) et/ou une gouttière (15) pour recueillir le fluide émis à partir de la ou des ouvertures correspondant au chauffage et/ou au refroidissement du fluide.

13. Ensemble de deux dispositifs ou plus selon l'une des revendications 1 à 12 qui sont installés, étant précisé que l'un au moins des dispositifs est de préférence installé de telle sorte qu'une partie de sa surface puisse réfléchir le rayonnement solaire sur un autre des dispositifs.

14. Procédé pour modifier une température de fluide, étant précisé qu'un dispositif pour refroidir et chauffer un fluide (3) est utilisé, le dispositif comportant une ou plusieurs ouvertures (2) correspondant au chauffage et/ou une ou plusieurs ouvertures (1) correspondant au refroidissement,
que le fluide est émis par la ou les ouvertures (1) correspondant au refroidissement de telle sorte que le fluide tombe ou soit projeté ou pulvérisé dans l'air, de sorte qu'une évaporation du fluide émis est intensifiée, entraînant l'extraction de chaleur à partir du fluide, lequel est ainsi refroidi,
le procédé comprenant par ailleurs l'exposition du dispositif au rayonnement solaire,
**caractérisé en ce que**, du fait qu'une partie du dispositif est chauffée par le rayonnement solaire, un écoulement d'air est produit ou intensifié, ce qui intensifie l'évaporation du fluide émis et, par conséquent, son refroidissement, étant précisé que l'air traverse un ou plusieurs conduits d'air (10) contenus dans une partie creuse (9) comprise par le dispositif, ladite partie creuse comportant des ouvertures (17 ; 18) par lesquelles le ou les conduits d'air laissent de l'air entrer et sortir,
que l'air est évacué du ou des conduits d'air à un endroit (18) de ceux-ci qui est situé en haut ou presque en haut, et que l'ouverture d'entrée (17) vers le conduit d'air est prévue au même niveau ou plus haut que la ou les ouvertures correspondant au refroidissement.

15. Procédé selon la revendication 14,
étant précisé que le fluide est pré-refroidi en traversant au moins un tube contenu à l'intérieur de la partie creuse,
et/ou que l'air est amené à partir d'un autre endroit vers la ou les ouvertures (17) de la partie creuse ou, quand le dispositif comprend un dispositif de protection (4) apte à protéger un espace (5) par rapport au ciel, vers au moins une ouverture (8) qui sert d'ouverture d'entrée d'air dans l'espace protégé,
que de l'air tel que de l'air sortant d'un bâtiment ou d'un moteur présentant une enthalpie supérieure ou inférieure à l'environnement, est de préférence évacué de l'autre endroit, et amené dans le dispositif.
